# EUROPÄISCHE PATENTSCHRIFT

(11) **EP 0 560 727 B1**
(45) Veröffentlichungstag und Bekanntmachung des Hinweises auf die Patenterteilung: **09.04.1997**
(21) Anmeldenummer: 93810165.6
(22) Anmeldetag: 04.03.1993
(51) Int. Cl.: G11B 7/24

(54) **Verfahren zur Speicherung von Informationen**
Information storage method
Méthode pour l'enregistrement d'informations

(30) Priorität: 11.03.1992 CH 787/92
(43) Veröffentlichungstag der Anmeldung: 15.09.1993
(73) Patentinhaber: Ciba Specialty Chemicals Holding Inc., 4057 Basel (CH)
(72) Erfinder: Mizuguchi, Jin, Dr., CH-1700 Fribourg (CH); Giller, Gérald, CH-1630 Bulle (CH)

(56) Entgegenhaltungen:
- EP-A- 0 267 873
- EP-A- 0 337 209
- EP-A- 0 401 791

## Beschreibung

Die vorliegende Erfindung betrifft ein Verfahren zum optischen Aufzeichnen und Speichern von Informationen in Form von Bits, bei dem man ein Aufzeichnungsmaterial, das auf einem Träger mindestens eine Schicht eines Pigments aus der Gruppe Dithiopyrrolopyrrole, Dithiochinacridone, Phthalocyanine oder Mischungen von zwei oder mehreren dieser Pigmente als Aufzeichnungsschicht enthält, punktweise oder linienweise einer Laserstrahlung im nahen Infrarotbereich (NIR-Bereich) aussetzt, das dadurch gekennzeichnet ist, dass (a) das Pigment eine Kristallmodifikation mit einem Absorptionsband im NIR-Bereich besitzt, (b) sich das Pigment in Kontakt mit einer festen organischen Verbindung befindet, die durch die Einwirkung der Laserstrahlung die Kristallmodifikation des Pigments ändert, so dass (c) nach der Bestrahlung die Absorption im NIR-Bereich erniedrigt ist, wobei die organische Verbindung vor und nach der Bestrahlung keine Absorption im NIR-Bereich aufweist.

Die Verwendung von Farbstoffen, die im NIR-Bereich Strahlung absorbieren, zur Aufzeichnung von Informationen in WORM-Systemen (write once read many) ist seit längerem bekannt und zum Beispiel von M. Emmelius in Angewandte Chemie, Heft 11, Seiten 1475-1502 (1989) beschrieben. Durch die Laserbestrahlung in solchen Aufzeichnungsmaterialien kann die für die Aufzeichnung von Informationen in Form von Bits notwendige Änderung der Absorption durch physikalische Veränderungen (zum Beispiel durch Sublimation) oder durch chemische Veränderungen (zum Beispiel Photochromie, Isomerisierungen oder thermische Zersetzung) erzielt werden. Systeme mit organischen Pigmenten, die bei der Laserbestrahlung direkt einer Phasenumwandlung (veränderte Anordnung der Moleküle) und einer damit verbundenen Erhöhung der Transmission bzw. Reflektivität beim Auslesen (Reduktion der Absorption) unterliegen, sind noch nicht bekannt geworden.

In der US-A-4 632 893 sind Schichtmaterialien beschrieben, bei denen auf einem metallischen und elektrisch leitenden sowie opaken Substrat eine Schicht eines Dithiopyrrolopyrrols aufgebracht ist, auf der sich eine weitere Schicht eines Hydrazons befindet. Das Dithiopyrrolopyrrol liegt hierbei in einer Modifikation vor, die ein Absorptionsband im NIR-Bereich aufweist. Diese Schichtsysteme eignen sich als elektrophotographische Photorezeptoren zur Erzeugung von latenten Bildern, indem man nach einer integralen Aufladung selektiv mit Laserstrahlung Ladungen abbaut. Das latente Bild kann dann nach bekannten reprographischen Methoden in ein sichtbares Bild übergeführt werden. In der US-A-4 760 004 sind ähnliche Schichtmaterialien mit einer Schicht eines Dithiochinacridons beschrieben.

In der EP-A-0 401 791 wird beschrieben, dass Dithiopyrrolopyrrole durch lokale Behandlung mit einem Lösungsmittel durch Phasenumwandlungen bedingte Absorptionsänderungen aufweisen, die mit der Bildung eines Absorptionsbands im NIR-Bereich verbunden ist. Die NIR-Absorption nimmt daher durch die Phasenumwandlung erheblich zu. Sie sind daher zum Aufzeichnen und Speichern von Informationen geeignet, indem man die Aufzeichnung in Form von Bits (entspricht der lokalen Behandlung) mit einem Tintenstrahldrucker vornimmt. Das Auslesen der Information kann im NIR-Bereich durch die Messung der erhöhten Absorption erfolgen.

Ferner ist es bekannt, dass die im NIR-Bereich eine hohe Absorption besitzende Phase von Dithiopyrrolopyrrolen und Dithiochinacridonen gegen den Einfluss von Wärme und Lichtstrahlung sehr stabil ist. Es ist daher bisher noch nicht möglich, diese Pigmente für die optische Speicherung zu verwenden, indem man die Phase so ändert, dass nach der Bestrahlung eine niedrigere NIR-Absorption vorhanden ist.

Es wurde nun gefunden, dass Pigmente aus der Gruppe der Dithiopyrrolopyrrole, Dithiochinacridone und Phthalocyanine in derjenigen Kristallmodifikation, die eine hohe Lichtabsorption im NIR-Bereich aufweist, durch Bestrahlung mit Laserlicht im NIR-Bereich (zum Beispiel einem Diodenlaser) direkt einer Phasenumwandlung unterliegen, wenn sie sich in Kontakt mit einer festen organischen Verbindung befinden. Die Phasenumwandlung führt zu einer Reduktion der NIR-Lichtabsorption. Mit diesen Pigmenten beschichtete Substrate, die sich in Kontakt mit einer festen organischen Verbindung befinden und die selbst vor und nach der Bestrahlung nicht im NIR-Bereich absorbieren, eignen sich daher ausgezeichnet als Materialien zur Aufzeichnung, Speicherung und Wiedergabe von Informationen (WORM-Systeme), wobei im Gegensatz zu bisherigen Systemen die Veränderung der NIR-Lichtabsorption von stark nach schwach erfolgt.

Ein Gegenstand der Erfindung ist ein Verfahren zum optischen Aufzeichnen und Speichern von Informationen in Form von Bits, bei dem man ein Aufzeichnungsmaterial, das auf einem Träger mindestens eine Schicht eines Pigments aus der Gruppe der Dithiopyrrolopyrrole, Dithiochinacridone, Phthalocyanine oder Mischungen von mehreren dieser Pigmente als Aufzeichnungsschicht enthält, punktweise oder linienweise einer Laserstrahlung im NIR-Bereich aussetzt, das dadurch gekennzeichnet ist, dass (a) das Pigment eine Kristallmodifikation mit einem Absorptionsband im NIR-Bereich besitzt, (b) sich das Pigment in Kontakt mit einer festen organischen Verbindung befindet, die durch die Einwirkung der Laserstrahlung die Kristallmodifikation des Pigments ändert, so dass (c) nach der Bestrahlung die Absorption im NIR-Bereich erniedrigt ist, wobei die organische Verbindung vor und nach der Bestrahlung keine Absorption im NIR-Bereich aufweist.

Ein anderer Gegenstand der Erfindung ist ein Informationen enthaltendes Material, bei dem in der Aufzeichnungsschicht eines Aufzeichnungmaterials aus einem Träger, auf dem mindestens eine Schicht eines Pigments der Gruppe der Dithiopyrrolopyrrole, Dithiochinacridone, Phthalocyanine oder Mischungen von mehreren dieser Pigmente als Aufzeichnungsschicht aufgebracht ist und diese Pigmente ein Absorptionsband im NIR-Bereich aufweisen, und die Pigmente sich in Kontakt mit einer festen organischen Verbindung befinden, die durch die Einwirkung der Laserstrahlung die Kristallmodifikation des Pigments ändert und selbst vor und nach der Bestrahlung keine Absorption im NIR-Bereich aufweist, Markierungen in Form von Bits eingeschrieben sind, die im NIR-Bereich gegenüber der unveränderten Umgebung eine erhöhte Reflexion und verminderte Absorption aufweisen.

Ein weiterer Gegenstand der Erfindung ist ein Material zur optischen Aufzeichnung und zur Speicherung von Informationen, bei dem auf einem gegebenfalls transparenten und dielektrischen Träger mindestens eine Schicht eines Pigments der Gruppe der Dithiopyrrolopyrrole, Dithiochinacridone, Phthalocyanine oder Mischungen von mehreren dieser Pigmente aufgebracht ist und das Pigment ein Absorptionsband im NIR-Bereich aufweist, wobei sich das Pigment in Kontakt mit einer festen organischen Verbindung befindet, die durch die Einwirkung der Laserstrahlung die Kristallmodifikation des Pigments ändert und selbst vor und nach der Bestrahlung keine Absorption im NIR-Bereich aufweist.

Als organisches Aufzeichnungsmaterial kommen zum Beispiel folgende Pigmente in Frage: Dithiochinacridone, Oxo-Phthalocyanine, Metallphthalocyanine und insbesondere Dithioketopyrrolopyrrole.

Beispiele für geeignete Dithioketopyrrolopyrrole sind 1,4-Dithioketo-3,6-diphenyl-pyrrolopyrrole (vgl. z.B. US-A-4 632 893). Bevorzugte 1,4-Dithioketo-3,6-diphenylpyrrolo-[3,4-c]-pyrrole haben die folgende Formel I, 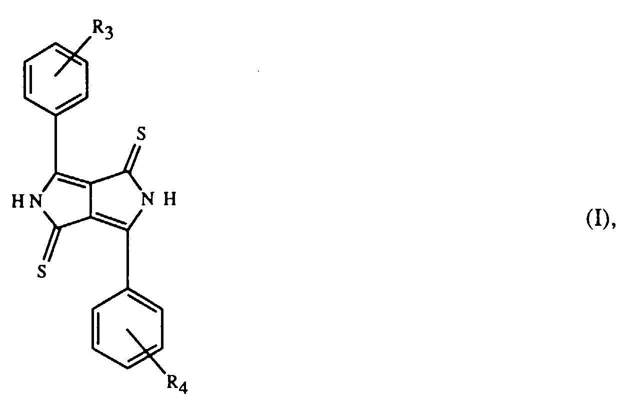 worin R₃ und R₄ unabhängig voneinander -H, -Cl, -CH₃, -OCH₃, -N(CH₃)₂, -SC₆H₅ oder -S-Alkyl mit 1 bis 12 C-Atomen sind. C₁-C₁₂-Alkyl ist z.B. Methyl, Ethyl, n-Propyl, n-Hexyl, n-Decyl und insbesondere n-Dodecyl.

Erfindungsgemäss besonders bevorzugt ist die Verbindung der Formel I, worin R₃ und R₄ insbesondere H bedeuten (nachstehend als DTPP abgekürzt).

Dithiochinacridone sind in der US-A-4 760 004 beschrieben. Sie können den Formeln II oder III entsprechen, wobei diese Verbindungen auch als Mischungen vorliegen können.

Als Dithiochinacridone eignen sich z.B. Derivate der Formeln (II) und (III), 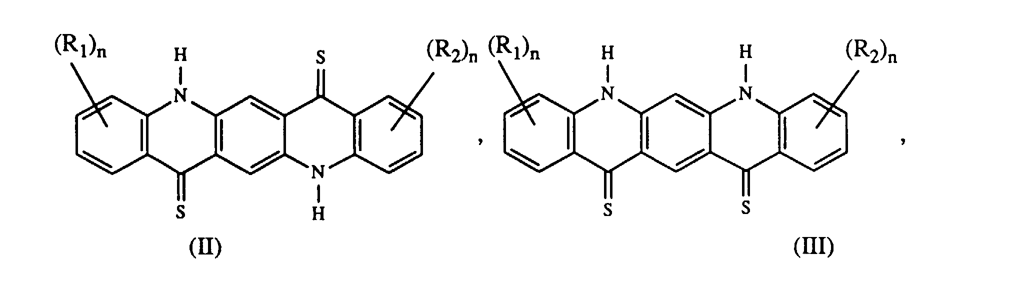 worin R₁ und R₂ H, F, Cl, Br, C₁-C₁₈-Alkyl oder C₁-C₃-Alkoxy darstellen und n für 0 oder die Zahlen 1, 2 oder 3 steht.

R₁ und R₂ können als Alkyl linear oder verzweigt sein und das Alkyl enthält bevorzugt 1 bis 12, besonders bevorzugt 1 bis 6 und insbesondere bevorzugt 1 bis 3 C-Atome. Beispiele sind Methyl, Ethyl, n- und i-Propyl, n-, i- und t-Butyl, Pentyl, Hexyl, Octyl, Nonyl, Decyl, Dodecyl, Tetradecyl und Octadecyl. Besonders bevorzugt sind Methyl und Ethyl. Beispiele für R₁ und R₂ als Alkoxy sind Methoxy, Ethoxy und n- und i-Propoxy. In den Formeln II und III steht n bevorzugt für 0, 1 oder 2 und besonders bevorzugt für 0 oder 1. In einer bevorzugten Ausführungsform handelt es sich bei den Chinacridonen um solche der Formeln II und III, worin R₁ und R₂ -H, -F, -Cl, -Br, -CH₃ oder CH₃O- bedeuten und n für 0 oder 1 steht. Besonders bevorzugt sind Chinacridone oder Formeln II und III, worin R₁ und R₂ -H sind.

Geeignete Phthalocyanine sind z.B. Oxo-phthalocyanine, wie Titanyl- und Vanadyl-phthalocyanin, und Metallphthalocyanine wie Indium-, Chlorindium-, Aluminium-, Magnesium- und Blei-phthalocyanin.

Gemische von Dithiopyrrolopyrrolen obiger Strukturen, Gemische von Dithiochinacridonen oder Phthalocyaninen, sowie auch Gemische dieser Pigmentklassen, können ebenfalls verwendet werden.

Bei dem im erfindungsgemässen Verfahren verwendeten Aufzeichnungsmaterial befindet sich zwischen dem gegebenenfalls mit einer Reflexionsschicht versehenen Träger und der Schicht aus Pigmenten und/oder auf dieser Schicht eine weitere Schicht einer festen organischen Verbindung mit den zuvor erwähnten Eigenschaften.

Für das vorliegende Verfahren geeignete feste organische Verbindungen haben vorzugsweise einen Schmelzpunkt von über 90°C. Darunter sind beispielsweise Ketone, wie z.B. Benzil, Benzoin, Anthron, Dimedon, 4,4'-Dimethoxybenzil, Fluoren-9-on, 1,3-Indandion oder Tetraphenyl-2,4-cyclopentadien-1-on; Ketone des Typs der Phenone, wie z.B. 4-Acetamidoacetophenon, 3-Aminoacetophenon, 4-Aminoacetophenon, 2-Aminobenzophenon, 4-Aminobenzophenon, 2-Amino-5-chlorbenzophenon, 4-Aminopropiophenon, 2,4-Dihydroxybenzophenon, 4,4'-Dihydroxybenzophenon, 4,4'-Dimethoxybenzophenon, 4-Hydroxybenzophenon, 4-Hydroxypropionphenon oder 4-Phenylacetophenon; Aldehyde, wie z.B. 4-Acetamidobenzaldehyd, 3,4-Dihydroxybenzaldehyd, 3,5-Dimethoxy-4-hydroxy-benzaldehyd, 4-(Dimethylamino)zimtaldehyd oder 4-Hydroxybenzaldehyd; Heterozyklen, wie z.B. 2-Thiazolin-2-thiol, N-Thiazol-2-ylsulfanilamid, 2-Acetylpyrrol, 2-Aminobenzothiazol, Cumarin, 2,2-Dimethyl-1,3-dioxan-4,6-dion, Hydantoin, 4-Hydroxycumarin, 7-Hydroxycumarin, Hydroxy-2-methyl-pyranon, Isatin, 2-Aminobenzothiazol, 2-Mercaptobenzothiazol, 2-Mercaptobenzoxazol, 2-Methylbenzimidazol, 2-Methylimidazol, 3-Methylindol, 3-Methyl-1-phenyl-2-pyrazolin-5-on, Oxindol, Phenothiazin, 2-Phenylimidazol, 4-Phenylurazol, Phthalazon, Tetrahydrofuran-2,4-dion, 1,1'-Thiocarbonyldiimidazol, Thioxothiazolidin-4-on, Xanthon, Thianthren, 4-Amino-antipyrin oder (4S,5R)-(+)-1,5-Dimethyl-4-phenylimidazolin-2-on; Amide, bzw. Hydrazide, wie z.B. 2-Aminobenzamid, 4-Aminobenzamid, 3-Aminocrotonsäureamid, 2-Aminocyanacetamid, Benzamid, Cyanacetamid, 2-Ethoxybenzamid, Nicotinsäureamid, Thioacetamid, Thiobenzamid, Essigsäure-2-phenylhydrazid oder Oxalsäurebis(cyclohexylidenhydrazid); Anilide, wie z.B. Acetanilid, 4-Aminoacetanilid, Benzanilid oder 4-Methylacetanilid; Imide, wie z.B. N-Hydroxy-5-norbornen-2,3-dicarbonsäureimid, N-Hydroxyphthalimid, N-Hydroxysuccinimid, Maleinimid, Malonsäureimid oder 1,2,3,6-Tetrahydrophthalimid; Carbonsäuren, wie z.B. 2-Acetylbenzoesäure, Acetylsalicylsäure, Adipinsäure, D-(+)-Aepfelsäure, 4-Aminobuttersäure, 2-Amino-5-chlorbenzoesäure, 4-Aminohippursäure, 6-Aminohexansäure, 3-Benzoylpropionsäure, Dehydracetsäure, L(+)-Dehydroascorbinsäure, Hippursäure, 2-Iodhippursäure, DL-Mendelsäure, R-(-)-Mandelsäure, Mercaptobernsteinsäure, 3-Oxoglutarsäure, (S)-(-)-N-(1-Phenylethyl)phthalamidsäure oder Malonsäure; Chinone, wie z.B. Acenapthenchinon, Anthrachinon, 2,3-Dichlor-5,6-dicyan-p-benzochinon, 1,4-Dihydroxyanthrachinon, 2-Ethylanthrachinon, 1,4-Naphthochinon, 9,10-Phenanthrenchinon, Tetramethyl-p-benzochinon oder Menadion; Harnstoffe, wie z.B. N,N-Dimethylharnstoff, Harnstoff, N-Methylharnstoff, N-Phenylharnstoff, 4-Phenylsemicarbazid oder 1-Phenylsemicarbazid; Thioharnstoffe, wie z.B. N-Acetylthioharnstoff, Thioharnstoff, N-Phenylthioharnstoff, Thiocarbohydrazid, Thiobiuret, 1-Phenylthiosemicarbazid, 4-Phenylthiosemicarbazid oder Thiosemicarbazid; Anhydride, wie z.B. Bernsteinsäureanhydrid, 3-Nitrophthalsäureanhydrid, Phthalsäureanhydrid, 1,2,3,6-Tetrahydrophthalsäureanhydrid oder Epiclon® B-4400 (Dainippon); Sulfone, wie z.B. 2,3-Dihydro-1,2-benzisothiazol-3-on-1,1-dioxid, 4,6-Diphenylthieno(3,4-d)-1,3-dioxol-2-on-5,5-dioxid oder Diphenylsulfon; Sulfoxide, wie z.B. Dibenzylsulfoxid oder Diphenylsulfoxid; Carbonsäureester, wie z.B. Diethyl-acetamidomalonat, Dimethyl-2-aminoterephthalat, Ethyl(acetamidocyanacetat), Ethyl(2-amino-4-thiozolyl)glyoxylat, Ethyloxamat oder Dimethylfumarat; aromatische Kohlenwasserstoffe, wie z.B. 1,1-H-Benzo(a)fluoren, 1,1-H-Benz(b)fluoren, Anthracen, 2-Nitrofluoren oder [2,2]-Paracyclophan; sowie weitere geeignete polyfunktionelle Verbindungen, wie z.B. N-Acetyl-L-cystein, N-Actylglycin, Acetylmethylentriphenylphosphoran, 1,3-Cyclohexadion, 1,3-Cyclopentadion, Desoxy-4-anisoin, 2,3-Diphenyl-2-cyclopropen-1-on, 1,5-Diphenylcarbazon, 9-Fluroenylmethyl-succinimidyl-carbonat, L-(+)-gulonsäure-γ-lacton, N-Hippuryl-L-arginin, N-Hippuryl-L-phenylalanin, N-Acetyl-L-cystein, N-Acetylglycin, 2-Methyl-1,3-cyclohexandion oder 2-Methyl-1,3-cyclopentandion.

Weitere geeignete feste organische Verbindungen sind Hydrazone, wobei das Hydrazon bevorzugt eine aromatische Gruppe an einem N-Atom gebunden enthält.

Die Hydrazone enthalten bevorzugt 6 bis 40 C-Atome und besonders bevorzugt 10 bis 30 C-Atome. Sie sind durch das Strukturelement -CH=N-N= gekennzeichnet. Die Hydrazone können zum Beispiel der Formel IV entsprechen, 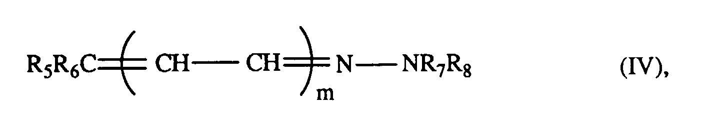 worin R₅ H, C₁-C₆-Alkyl oder Phenyl bedeutet, das unsubstituiert oder mit F, Cl, Br, C₁-C₆-Alkyl, C₁-C₆-Alkoxy, Di(C₁-C₆-Alkyl)amino, Diphenylamino, Dibenzylamino, Phenyl-benzyl-amino,(C₁-C₆-Alkyl)-phenyl-amino oder (C₁-C₆-Alkyl)-benzyl-amino substituiert ist,
R₆ Phenyl, Naphthyl, Anthryl, Styryl, Pyridyl, Furyl oder Thiophenyl darstellt, die unsubstituiert oder mit F, Cl, Br, C₁-C₆-Alkyl, C₁-C₆-Alkoxy, Di(C₁-C₆-Alkyl)amino, Diphenylamino, Dibenzylamino, Phenyl-benzyl-amino, (C₁-C₆-Alkyl)-phenyl-amino oder (C₁-C₆-Alkyl)-benzyl-amino substituiert sind, oder R₅ H und R₆ einen Carbazolrest der Formel 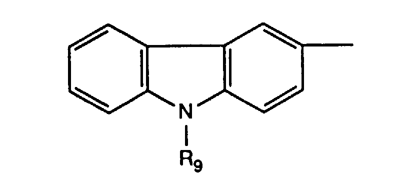 bedeuten, der unsubstituiert oder mit F, Cl, Br, C₁-C₆-Alkyl, C₁-C₆-Alkoxy oder Di(C₁-C₆-Alkyl)amino substituiert ist, wobei R₉ C₁-C₆-Alkyl darstellt, R₇ und R₈ unabhängig voneinander C₁-C₆-Alkyl, Phenyl, Naphthyl oder Benzyl oder mit F, Cl, Br, C₁-C₆-Alkyl, C₁-C₆-Alkoxy oder Di(C₁-C₆-Alkyl)amino substituiertes Phenyl, Naphthyl oder Benzyl bedeuten, und m für 0 oder 1 steht.

In der Formel IV steht m bevorzugt für 0. R₅, R₆, R₇, R₈, R₉ und Substituenten können als Alkyl linear oder verzweigt sein und enthalten bevorzugt 1 bis 4 C-Atome, besonders bevorzugt 1 oder 2 C-Atome. Einige Beispiele sind Methyl, Ethyl, n- und i-Propyl, n-, i- und t-Butyl, Pentyl und Hexyl. Bevorzugt sind Methyl und Ethyl.

Der Substituent Alkoxy enthält bevorzugt 1 bis 4 C-Atome und er kann linear oder verzweigt sein. Einige Beispiele sind Methoxy, Ethoxy, n- und i-Propoxy, n-, i- und t-Butoxy, Pentoxy und Hexoxy. Bevorzugt sind Methoxy und Ethoxy.

Einige Beispiele für bevorzugte Alkylaminosubstituenten sind Dimethyl-, Diethyl-, Methyl-ethyl-, Di-n- oder Di-i-propyl-, Di-n-butyl-, n-Propyl-methyl-, n-Butyl-methyl-, n-Propyl-ethyl-, n-Butyl-ethyl-, Methyl-phenyl-, Ethyl-phenyl-, Methyl-benzyl- und Ethylbenzyl-amino.

Weitere geeignete feste organische Verbindungen sind Pigmente oder pigmentartige Verbindungen, zum Beispiel unsubstituierte oder substituierte Pyrrolopyrrole oder Chinacridone. Die Pyrrolopyrrole können der Formel V entsprechen, 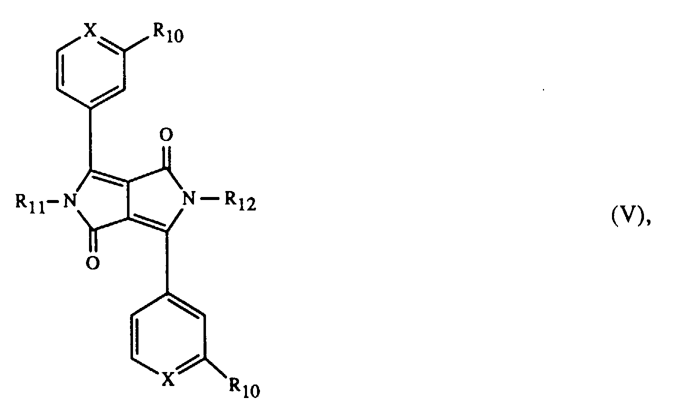 worin die X unabhängig voneinander für CH, CCl oder N steht, R₁₀ H oder Cl bedeutet und R₁₁ und R₁₂ unabhängig voneinander H oder CH₃ darstellen. Solche Verbindungen sind zum Beispiel in der US-A-4 579 949 und in der US-A-4 585 878 beschrieben. Einige Beispiele sind 1,4-Diketo-3,6-diphenyl-pyrrolo-[3,4-c]-pyrrol, 1,4-Diketo-3,6-bis-(4-chlorphenyl)-pyrrolo-[3,4-c]-pyrrol, 1,4-Diketo-3,6-bis-(3-chlorphenyl)-pyrrolo-[3,4-c]-pyrrol, 1,4-Diketo-3,6-bis-(4'-pyridyl)-pyrrolo-[3,4-c]-pyrrol, 1,4-Diketo-2,5-dimethyl3,6-diphenyl-pyrrolo-[3,4-c]-pyrrol und 1,4-Diketo-2-methyl-3-(4-chlorphenyl)-6-phenylpyrrolo-[3,4-c]-pyrrol.

Die Chinacridone können der Formel VI 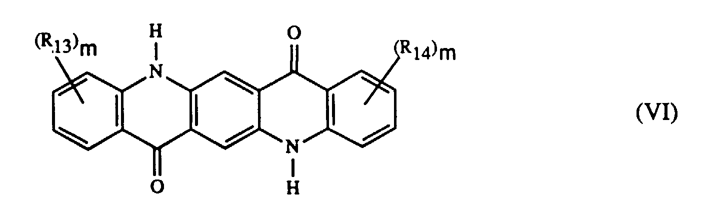 entsprechen, worin R₁₃ und R₁₄ unabhängig voneinander H, F, Cl, Br oder C₁-C₃-Alkoxy darstellen und m für 1, 2 oder 3 steht. Solche Chinacridone sind von E. E. Jaffe im Journal of the Oil and Colour Chemists' Association 1, Seiten 24 bis 31 (1992) beschrieben.

Bevorzugte feste organische Verbindungen sind Benzil, 4-Aminobenzophenon, 3,4-Dihydroxybenzaldehyd, 2-Methylbenzimidazol, Malonsäure, Acenaphthenchinon, N-Phenylharnstoff, Thioharnstoff, 4-Methylacetanilid, Diphenylsulfon, Dibenzylsulfoxid, Anthracen, Saccharin oder die obenerwähnten 1,4-Diketopyrrolopyrrole, Chinacridone und Hydrazone. Bevorzugte Hydrazone sind solche der Formeln

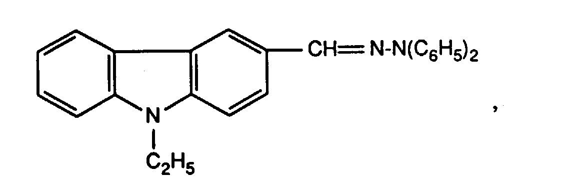

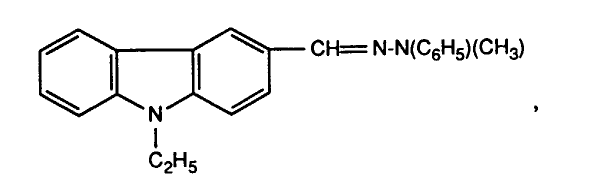

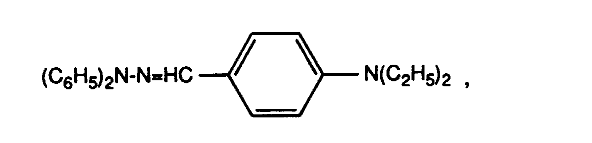

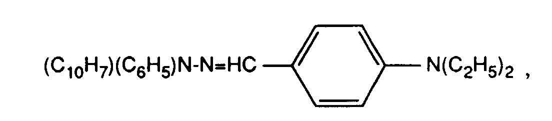

(C₆H₅)₂N-N=CH-CH=C(p-CH₃O-C₆H₅)₂.

Besonders bevorzugte feste organische Verbindungen sind Malonsäure, N-Phenylharnstoff, ein organisches Hydrazon, Dipyrrolopyrrole und insbesondere Dibenzylsulfoxid (DBS).

Eine bevorzugte Ausgestaltung stellt ein Aufzeichnungsmaterial dar, in dem das Pigment DTPP oder ein Dithiochinacridon und die feste organische Verbindung ein Hydrazon ist.

Die festen organischen Verbindungen sind durch zwei Eigenschaften charakterisiert: (a) keine Absorption im NIR-Bereich und (b) Wechselwirkung mit dem Pigment der Aufzeichnungsschicht und dessen Umwandlung in eine Phase ohne oder mit nur geringer NIR-Absorption. Solche Verbindungen können vom Fachmann ohne Mühe mittels Messungen ermittelt werden.

Geeignete Träger sind zum Beispiel Metalle, Metallegierungen, Gläser, Mineralien, Keramiken und duroplastische oder thermoplastische Kunststoffe. Der Träger kann eine Dikke von 0,01 mm bis 1 cm, bevorzugt 0,1 mm bis 0,5 cm aufweisen. Bevorzugte Träger sind Gläser und homo- oder copolymere Kunststoffe. Geeignete Kunststoffe sind zum Beispiel thermoplastische Polycarbonate, Polyamide, Polyester, Polyacrylate und Polymethacrylate, Polyurethane, Polyolefine, Polyvinylchlorid, Polyvinylidenfluorid, Polyimide, duroplastische Polyester und Epoxidharze.

Träger können nach den für duroplastische und thermoplastische üblichen Misch- und Formgebungsverfahren wie zum Beispiel Giess-, Press-, Spritzguss- und Extrusionsverfahren hergestellt werden.

Auf dem Träger können ein oder mehrere, zum Beispiel 1 bis 10, bevorzugt 1 bis 5 und besonders bevorzugt 1 bis 3 Schichten aus Pigmenten aufgebracht sein. Die Anzahl der Schichten und weiterer Schichten richtet sich hauptsächlich nach der gewünschten optischen Dichte des Schichtaufbaus, die bei der zur Aufzeichnung verwendeten Wellenlänge noch eine ausreichende Absorption gewährleisten muss.

Die Schichtdicke der Schicht aus Pigmenten beträgt zum Beispiel 100 bis 3000 Å, bevorzugt 100 bis 2000 Å und besonders bevorzugt 200 bis 1000 Å.

Auf der Schicht aus Pigmenten oder auf dem Träger kann eine Reflexionsschicht aufgebracht sein, die eine Dicke von zum Beispiel 100 bis 5000 Å, bevorzugt 100 bis 3000 Å und besonders von 300 bis 1000 Å aufweisen kann. Als reflektierendes Material eignen sich besonders Metalle, die die zur Aufzeichnung und Wiedergabe verwendete Laserstrahlung gut reflektieren, zum Beispiel die Metalle der dritten, vierten und fünften Hauptgruppe und den Nebengruppen des periodischen Systems der chemischen Elemente. Besonders geeignet sind Al, In, Sn, Pb, Sb, Bi, Cu, Ag, Au, Zn, Cd, Hg, Sc, Y, La, Ti, Zr, Hf, V, Nb, Ta, Cr, Mo, W, Fe, Co, Ni, Ru, Rh, Pd, Os, Ir, Pt und die Lanthanidenmetalle Ce, Pr, Nd, Pm, Sm, Eu, Gd, Tb, Dy, Ho, Er, Tm, Yb und Lu. Besonders bevorzugt ist aus Gründen der hohen Reflektivität und leichten Herstellbarkeit eine Reflexionsschicht aus Aluminium oder Gold.

Die je nach Schichtaufbau oberste Schicht, zum Beispiel die Reflexionsschicht, die Schicht aus einem Pigment oder eine weitere Hilfsschicht (zum Beispiel aus einem festen organischen Lösungsmittel) wird zweckmässig mit einer Schutzschicht versehen, die eine Dicke von 0,1 bis 100 µm, bevorzugt 0,1 bis 50 µm und besonders bevorzugt 0,5 bis 15 µm aufweisen kann. Als Schutzmaterial eignen sich hauptsächlich Kunststoffe, die in dünner Schicht entweder direkt oder mit Hilfe von Haftschichten auf den Träger oder die oberste Schicht aufgetragen sind. Man wählt zweckmässig mechanisch und thermisch stabile Kunststoffe mit guten Oberflächeneigenschaften, die noch modifiziert, zum Beispiel beschrieben werden können. Bevorzugt sind strahlungsgehärtete (zum Beispiel mit UV-Strahlung) Schutzschichten, die besonders einfach und wirtschaftlich herstellbar sind. Strahlungshärtbare Materialien sind in grosser Vielzahl bekannt. Beispiele für strahlungshärtbare Monomere und Oligomere sind Acrylate und Methacrylate von Diolen, Triolen und Tetrolen, Polyimide aus aromatischen Tetracarbonsäuren und aromatischen Diaminen mit C₁-C₄-Alkylgruppen in mindestens zwei Orthostellungen der Aminogruppen, und Oligomere mit Dialkyl-, zum Beispiel Dimethylmaleinimidylgruppen. Spezifische Beispiele sind UV-vernetzbare Polymere auf der Basis von Polyacrylaten wie zum Beispiel RENGOLUX® RZ 3200/003 und 3203/001 der Firma Morton International-Dr. Renger, sowie SD-17 der Dainippon Ink Company.

Die Schicht kann als solche aus der festen organischen Verbindung gebildet sein, oder als feste Mischung des Pigments mit der Verbindung oder als gleichmässige Mischung der festen Verbindung mit einem transparenten Bindemittel, zum Beispiel einem Kunststoff vorliegen. Die Schichtdicke in Form eines aufgedampften Filmes bei reinen festen organischen Verbindungen kann zum Beispiel 30 bis 2000 Å, bevorzugt 50 bis 1000 Å und besonders bevorzugt 100 bis 500 Å betragen. Die Schichtdicke der aufgedampften Mischung Pigment/feste organische Verbindung kann zum Beispiel 50 bis 6000 Å, bevorzugt 100 bis 3000 Å und besonders bevorzugt 200 bis 1500 Å betragen. Die Schichtdicke der Mischung aus organischer Verbindung und Bindemittel (appliziert z.B. mit einer Belackungsanlage) kann zum Beispiel 0,1 bis 100 µm, bevorzugt 0,5 bis 50 µm und besonders bevorzugt 0,5 bis 5 µm betragen. Die Mischung mit dem Bindemittel kann 0,1 bis 95 Gew.-%, bevorzugt 1 bis 80 Gew.-% und besonders bevorzugt 1 bis 60 Gew.-% einer festen organischen Verbindung enthalten, bezogen auf die Gesamtmenge an Bindemittel und Verbindung. Als transparente Bindemittel eignen sich zum Beispiel die zuvor für das Substrat erwähnten Kunststoffe. Bevorzugt sind insbesondere Polyolefine, Polycarbonate, sowie ferner Polymethacrylate wie zum Beispiel Polymethylmethacrylat, duroplastische Polyester und Epoxidharze. Bei der Mischung kann es sich auch um den Träger selbst handeln, z.B. um ein Polycarbonat, dem die feste organische Verbindung einverleibt ist.

Die erfindungsgemäss zu verwendenden Aufzeichnungsmaterialien können nach an sich bekannten Verfahren hergestellt werden, wobei je nach verwendeten Materialien und deren Funktionsweise unterschiedliche Beschichtungsmethoden angewendet werden können.

Geeignete Beschichtungsverfahren sind zum Beispiel Tauchen, Giessen, Streichen, Rakeln, Schleudergiessen und Aufdampfverfahren, die im Hochvakuum durchgeführt werden. Bei der Anwendung von zum Beispiel Giessverfahren werden im allgemeinen Lösungen in organischen Lösungsmitteln verwendet, die im Fall der Verwendung von festen organischen Verbindungen noch ein Bindemittel enthalten können. Bei der Verwendung von Lösungsmitteln ist darauf zu achten, dass die verwendeten Träger gegen diese Lösungsmittel unempfindlich sind. Bevorzugt werden alle Schichten mittels Aufdampfverfahren besonders im Vakuum hergestellt. Geeignete Beschichtungsverfahren sind zum Beispiel in der EP-A-0 401 791 beschrieben. Die Pigmentschicht(en) und Schicht(en) einer festen organischen Verbindung können nacheinander oder gleichzeitig aufgedampft werden.

Das Aufbringen der Aufzeichnungsschicht(en) und der metallischen Reflexionsschichten erfolgt bevorzugt durch Aufdampfen im Vakuum. Das aufzubringende Material wird zunächst in ein geeignetes Gefäss gefüllt, das gegebenenfalls mit einer Widerstandsheizung versehen ist, und dann in eine Vakuumkammer gesetzt. Der zu bedampfende Träger wird oberhalb des Gefässes mit dem aufzudampfenden Material in einen Halter eingesetzt. Dieser ist so konstruiert, dass der Träger gegebenenfalls rotiert (z.B. mit 10 Upm) und geheizt werden kann. Die Vakuumkammer wird auf etwa 1,3 · 10⁻⁵ bis 1,3 · 10⁻⁶ mbar (10⁻⁵ bis 10⁻⁶ Torr) evakuiert, und die Heizung wird so eingestellt, dass die Temperatur des aufzudampfenden Materials bis zu dessen Verdampfungstemperatur ansteigt. Die Verdampfung wird so lange fortgesetzt, bis die aufgedampfte Schicht die gewünschte Dicke hat. Je nach Systemaufbau wird zuerst die organische Aufzeichnungsverbindung und dann die reflektierende Schicht aufgebracht, oder es kann umgekehrt verfahren werden. Auf das Aufbringen einer reflektierenden Schicht kann gegebenenfalls verzichtet werden. Diese Aufdampfmethode ist besonders zum gleichzeitigen Aufbringen von obenerwähnten Pigmenten (z.B. DTPP oder Dithiochinacridonen) und festen organischen Verbindungen (z.B. Hydrazonen oder DBS) zur Bildung homogener Mischschichten geeignet.

Die Sputtertechnik wird besonders wegen der hohen Haftfähigkeit zum Träger für das Aufbringen der metallischen Reflexionsschicht bevorzugt. Das aufzubringende Material (z.B. Aluminium) in Form einer Platte wird als eine "Target"-Elektrode benutzt, während der Träger auf der Gegenelektrode befestigt wird. Zuerst wird die Vakuumkammer auf etwa 10⁻⁶ Torr evakuiert und dann inertes Gas, wie z.B. Argon, bis zu etwa 10⁻³ Torr eingeführt. Zwischen der "Target"-Elektrode und der Gegenelektrode wird eine hohe Gleich- oder Radiofrequenz-Spannung von mehreren kV, gegebenenfalls unter Verwendung von Permanentmagneten ("Magnetron-Sputtering"), angelegt, um Ar⁺-Plasma zu erzeugen. Die durch die Ar⁺-Ionen von der "Target"-Elektrode gesputterten (herausgeschlagenen) Metallteilchen werden auf dem Substrat gleichmässig und fest deponiert. Die Beschichtung erfolgt innerhalb von einigen 10 Sekunden bis mehreren Minuten je nach Targetmaterialien, Sputtermethode und Sputterbedingungen. Diese Sputtertechnik ist in Fachbüchern ausführlich beschrieben (wie z.B. W. Kern und L. Vossen, "Thin Film Processes", Academic Press, 1978).

Die Dicke der beim Aufdampfen gebildeten Schichten kann mit Hilfe bekannter Verfahren überwacht werden, z.B. mit Hilfe eines optischen Systems, welches während der Aufdampfung das Reflexionsvermögen der mit dem Absorptionsmaterial bedeckten Reflexionsoberfläche misst. Vorzugsweise wird das Wachsen der Schichtdicke mit einem Schwingquarz verfolgt.

Die Herstellung der Pigmentphase mit einem Absorptionsband im NIR-Bereich erfolgt nach an sich bekannten Verfahren. So können die Pigmentschichten mit Lösungsmitteldämpfen behandelt werden, wie es zum Beispiel in der US-A-4 760 151 für Pyrrolopyrrole, US-A-4 760 004 für Chinacridone und von K. Arishima et al., Appl. Phys. Letters 40 (3), S.279 (1982) für Phthalocyanine beschrieben ist. Geignete Lösungsmittel sind, z.B. Aceton, Tetrahydrofuran, Methanol, Acetonitril, 1-Acetoxy-2-ethoxyethan, Dimethylsulfoxid, Ethylacetat oder Methylisobutylketon. Bevorzugt ist Methylisobutylketon.

Das erforderliche Absorptionsband im NIR-Bereich kann auch direkt während der Herstellung der Reflexionsschicht unter Verwendung der Vakuumtechnik durch eine thermische Einwirkung erzielt werden.

Schutzschichten werden bevorzugt mittels Belackungsanlagen ("spin coater") aufgetragen und bei Verwendung von lichtempfindlichen Materialien mit UV-Licht vernetzt.

Das erfindungsgemäss zu verwendende Material eignet sich hervorragend zur Aufzeichnung von Informationen durch Bestrahlung mit Lasern im NIR-Bereich. Nach der Bestrahlung wird eine starke Abnahme der Absorption beobachtet. Die Veränderung der Absorption bzw. Transmission kann daher zum Auslesen der Information verwendet werden, wobei keine Zerstörung der eingeschriebenen Information durch die zum Auslesen verwendete Laserstrahlung stanfindet. Die Informationen können daher mehrfach ausgelesen werden.

Der Aufbau des erfindungsgemässen Aufzeichnungsmaterials richtet sich hauptsächlich nach der Auslesemethode; bekannte Funktionsprinzipien sind die Messung der Veränderung der Transmission oder der Reflexion. Wenn das Aufzeichnungsmaterial gemäss der Veränderung der Lichttransmission aufgebaut wird, kommt zum Beispiel folgende Struktur in Frage: Transparenter Träger/Aufzeichnungsschicht (gegebenenfalls mehrschichtig) und falls zweckmässig, transparente Schutzschicht. Das Licht zur Aufzeichnung sowie zum Auslesen kann entweder von der Trägerseite oder der Aufzeichnungsschicht bzw. gegebenenfalls der Schutzschichtseite eingestrahlt werden, wobei sich der Lichtdetektor immer auf der Gegenseite befindet.

Wenn das Aufzeichnungsmaterial gemäss der Veränderung der Reflexion aufgebaut wird, so können zum Beispiel folgende andere Strukturen zur Anwendung kommen: Transparenter Träger/Aufzeichnungsschicht (gegebenenfalls mehrschichtig)/Reflexionsschicht und falls zweckmässig, Schutzschicht (nicht unbedingt transparent), oder Träger (nicht unbedingt transparent)/Reflexionsschicht/Aufzeichnungsschicht und falls zweckmässig transparente Schutzschicht. Im ersten Fall wird das Licht von der Trägerseite eingestrahlt, während im letzten Fall die Strahlung von der Aufzeichnungsschicht- bzw. gegebenenfalls von der Schutzschichtseite einfällt. In beiden Fällen befindet sich der Lichtdetektor auf gleicher Seite wie die Lichtquelle. Der ersterwähnte Aufbau des erfindungsgemäss zu verwendenden Aufzeichnungsmaterials ist im allgemeinen bevorzugt.

Als Aufzeichnungsschicht in den obigen Strukturen ist erfindungsgemäss eine Kombination von Pigment und fester organischer Verbindung zu verstehen.

Geeignete Laser sind zum Beispiel handelsübliche Diodenlaser, insbesondere Halbleiter-Diodenlaser, zum Beispiel GaAsAl-, InGaAlP- oder GaAs-Laser einer Wellenlänge von 780, 650 beziehungsweise 830 nm. Die Aufzeichnung kann mit Hilfe eines Lichtmodulators Punkt für Punkt vorgenommen werden.

Die zur Aufzeichnung verwendete Energie der Laserstrahlung kann zum Beispiel von 0,1 bis 10 nJ/Markierung (Bit), bevorzugt von 0,2 bis 5 nJ/Markierung (Bit) und besonders bevorzugt 0,8 bis 3 nJ/Markierung (Bit) betragen. Die Energiemenge wird im wesentlichen durch die Bestrahlungszeit gesteuert, zum Beispiel durch Pulse im Bereich von einigen Mikrosekunden, zum Beispiel 10 bis 100 Nanosekunden.

Das erfindungsgemässe Verfahren ermöglicht eine Speicherung von Informationen mit hoher Zuverlässigkeit und Beständigkeit, welche sich durch eine sehr gute mechanische und thermische Stabilität sowie durch eine hohe Lichtstabilität und scharfe Randzonen auszeichnen. Besonders vorteilhaft sind die hohe Lichtempfindlichkeit und das überraschend hohe Signal/Rauschverhältnis von Trägermaterial zur Informationsmarkierung, das ein einwandfreies Auslesen zulässt. Das optische Aufzeichnungssystem ist einfach und kostengünstig. Ferner werden in dem System keine toxischen Materialien wie zum Beispiel Selen verwendet.

Das Auslesen der Information erfolgt durch Messung der Absorption nach dem Reflexionsverfahren oder Transmissionsverfahren unter Verwendung von Laserstrahlung, wobei es besonders vorteilhaft ist, dass Laserstrahlung der zur Aufzeichnung benutzten Wellenlänge verwendet werden kann, also auch kein zweiter Laser eingesetzt werden muss. In einer bevorzugten Ausführungsform erfolgt das Aufzeichnen und Auslesen der Information bei gleicher Wellenlänge. Beim Auslesen verwendet man im allgemeinen energiearme Laser, deren Strahlungsintensität gegenüber der zur Aufzeichnung verwendeten Laserstrahlung zum Beispiel um das zehn- bis fünfzigfache reduziert ist. Die Informationen können beim erfindungsgemäss verwendeten Aufzeichnungsmaterial ein- oder mehrfach ausgelesen werden. Die Veränderung im Absorptionsspektrum bzw. die gespeicherte Information kann mit einem Photodetektor unter Verwendung eines energiearmen Lasers abgelesen werden. Geeignete Photodetektoren umfassen PIN-Photodioden, welche es ermöglichen, die spektralen Veränderungen durch Transmission oder Absorption und insbesondere Reflexion zu messen.

Mit dem erfindungsgemässen Verfahren kann eine hohe Speicherdichte erreicht werden. Mögliche Anwendungen der Erfindung sind z.B. als Speichermaterialen für Computer oder Ausweis- und Sicherheitskarten.

Das erfindungsgemässe Material kann folgenden Aufbau aufweisen:
(a) transparenter Träger, (b) Aufzeichnungsschicht und (c) transparente Schutzschicht;
   oder
(a) transparenter Träger, (b) Aufzeichnungsschicht, (c) Reflexionsschicht und (d) Schutzschicht;
   oder
(a) Träger, (b) Reflexionsschicht, (c) Aufzeichnungsschicht und (d) transparente Schutzschicht.

Eine bevorzugte Ausführung der Aufzeichnungsschicht ist aus mindestens einer Schicht eines Dithiopyrrolopyrrols und mindestens einer Schicht Dibenzylsulfoxid oder eines organischen Hydrazons, oder aus mindestens einer Schicht in Form einer homogenen Mischung eines Dithiopyrrolopyrrols und Dibenzylsulfoxid oder eines organischen Hydrazons gebildet.

Eine andere bevorzugte Ausführung der Aufzeichnungsschicht ist aus mindestens einer Schicht eines Dithiochinacridons und mindestens einer Schicht eines organischen Hydrazons, oder aus mindestens einer Schicht in Form einer homogenen Mischung eines Dithiochinacridons und eines organischen Hydrazons gebildet.

Das Material kann so gestaltet sein, dass sich zwischen dem Aufzeichnungsmaterial und dem Träger oder auf dem Aufzeichnungsmaterial eine Schicht aus einer festen organischen Verbindung gegebenenfalls zusammen mit einem transparenten Bindemittel befindet.

Das Aufzeichnungsmaterial kann eine homogene Mischung aus einem Pigment und einer festen organischen Verbindung darstellen. Vorzugsweise ist das Pigment ein Dithiopyrrolopyrrol oder ein Dithiochinacridon und die feste Verbindung ein organisches Hydrazon. Auf der obersten Schicht des Materials kann eine Reflexionsschicht aufgebracht sein, die gegebenenfalls mit einer Schutzschicht bedeckt ist.

Die nachfolgenden Beispiele erläutern die Erfindung näher.

### Beispiel 1:

1,4-Dithioketo-3,6-diphenyl-pyrrolo-[3,4-c]-pyrrol (DTPP), das Hydrazon (C₂H₅)₂N-C₆H₄-p-CH=N-N(C₆H₅)₂ und DTPP werden im Hochvakuum in Schichtdicken von je etwa 150 Å, 150 Å beziehungsweise 450 Å auf einen Träger aus Polycarbonat (Dicke 1,2 mm) aufgedampft. Durch das Aufdampfen ensteht DTPP in der Kristallmodifikation mit einer Absorption im NIR-Bereich. Darauf wird auf der Schicht aus DTPP nach dem Verfahren der Vakuumverdampfung im Hochvakuum eine etwa 1000 Å dicke Reflexionsschicht aus Aluminium aufgedampft. Danach wird ein UV-vernetzbares Photopolymer (RENGOLUX® RZ 3203/001) in einer Dicke von etwa 8 µm aufgetragen und mit UV-Licht vernetzt. Elektronische Informationen werden unter Verwendung eines GaAsAl-Diodenlasers (Toshiba) von 780 nm (Strahlungsleistung 9 mW) aufgezeichnet, während der Träger mit einer linearen Geschwindigkeit von 1,4 ms⁻¹ rotiert. Die vor und nach Aufzeichnung bei der gleichen Wellenlänge von 780 nm durch den Träger gemessene Reflexion beträgt 25 % beziehungsweise 65 %.

### Beispiel 2:

Gemäss Beispiel 1 werden unsubstituiertes Dithiochinacridon der Formel II statt DTPP, und ein Glasträger statt Polycarbonat verwendet. Die Schichtdicken betragen je etwa 150 Å, 200 Å bzw. 650 Å. Diese Schicht wird während 30 Minuten Methylisobutylketondämpfen ausgesetzt, um eine Umwandlung in eine Phase mit NIR-Absorption zu bewirken. Eine Reflexionsschicht aus Aluminium sowie eine Schutzschicht werden gemäss Beispiel 1 aufgetragen. Elektronische Informationen werden unter Verwendung eines GaAsAl-Diodenlasers (Toshiba) von 780 nm (Strahlungsleistung 9 mW) aufgezeichnet, während der Träger mit einer linearen Geschwindigkeit von 1,4 ms⁻¹ rotiert. Die vor und nach Aufzeichnung bei der gleichen Wellenlänge von 780 nm durch den Träger gemessene Reflexion beträgt 20 % beziehungsweise 38 %.

### Beispiel 3:

Gemäss Beispiel 1 wird Dibenzylsulfoxid statt des Hydrazons (C₂H₅)₂N-C₆H₄-p-CH=N-N(C₆H₅) verwendet. Die Schichtdicken sind je etwa 200 Å, 200 Å bzw. 600 Å. Die vor und nach der Aufzeichnung gemessene Reflexion beträgt 10 % beziehungsweise 58 %.

### Beispiel 4:

Auf einem Substrat aus einem Polyolefin (Zeonex® von Nippon ZEON) wird zuerst 1,4-Diketo-3,6-diphenyl-pyrrolo-[3,4-c]-pyrrol in einer Schichtdicke von 200 Å aufgedampft. Anschliessend wird DTPP in einer Schichtdicke von 600 Å aufgedampft und eine 900 Å dicke Schicht aus Aluminium. Die Aluminiumschicht wird auf einer Belackungsanlage mit einer UV-vernetzten Schicht eines Photopolymers (SD-17 von Dainippon Inc.) bedeckt. Mit einem Dioden-Laser werden bei 780 nm mit einer konstanten Winkelgeschwindigkeit von 1250 Umdrehungen pro Minute Informationsbits eingeschrieben. Die vor und nach der Aufzeichnung gemessene Reflexion beträgt 16 % beziehungsweise 33 %.

### Beispiel 5:

Es wird gemäss Beispiel 4 verfahren und 1,4-Diketo-3,6-bis-(4'-pyridyl)-pyrrolo-[3,4-c]-pyrrol anstelle von DPP3067 verwendet, dessen Schichtdicke 300 Å beträgt. Die vor und nach der Aufzeichnung gemessene Reflexion beträgt 15 % beziehungsweise 30 %.

### Beispiel 6:

Es wird gemäss Beispiel 4 verfahren und anstelle von 1,4-Diketo-3,6-diphenyl-pyrrolo-[3,4-c]-pyrrol 1,4-Diketo-3-(4'-chlorphenyl)-6-pyridyl-pyrrolo-[3,4-c]-pyrrol verwendet. Die vor und nach der Aufzeichnung gemessene Reflexion beträgt 15 % beziehungsweise 35 %.

### Beispiel 7:

Es wird gemäss Beispiel 4 verfahren und Chinacridon anstelle von 1,4-Diketo-3,6-diphenyl-pyrrolo-[3,4-c]-pyrrol in einer Schichtdicke von 300 Å verwendet. Die Schichtdicke von DTPP beträgt 700 Å. Die vor und nach der Aufzeichnung gemessene Reflexion beträgt 17 % beziehungsweise 40 %.

## Patentansprüche

1. Verfahren zum optischen Aufzeichnen und Speichern von Informationen in Form von Bits, bei dem man ein Aufzeichnungsmaterial, das auf einem Träger mindestens eine Schicht eines Pigments aus der Gruppe der Dithiopyrrolopyrrole, Dithiochinacridone, Phthalocyanine oder Mischungen von mehreren dieser Pigmente als Aufzeichnungsschicht enthält, punktweise oder linienweise einer Laserstrahlung im NIR-Bereich aussetzt, dadurch gekennzeichnet, dass (a) das Pigment eine Kristallmodifikation mit einem Absorptionsband im NIR-Bereich besitzt, (b) sich das Pigment in Kontakt mit einer festen organischen Verbindung befindet, die durch die Einwirkung der Laserstrahlung die Kristallmodifikation des Pigments ändert, so dass (c) nach der Bestrahlung die Absorption im NIR-Bereich erniedrigt ist, wobei die organische Verbindung vor und nach der Bestrahlung keine Absorption im NIR-Bereich aufweist.

2. Verfahren gemäss Anspruch 1, dadurch gekennzeichnet, dass es sich bei dem Träger um Metalle, Metallegierungen, Gläser, Mineralien, Keramiken und duroplastische oder thermoplastische Kunststoffe handelt.

3. Verfahren gemäss Anspruch 2, dadurch gekennzeichnet, dass es sich bei dem Träger um Gläser oder homo- oder copolymere Kunststoffe handelt.

4. Verfahren gemäss Anspruch 3, dadurch gekennzeichnet, dass es sich bei dem Kunststoff um thermoplastische Polycarbonate, Polyamide, Polyester, Polyacrylate und Polymethacrylate, Polyurethane, Polyolefine, Polyvinylchlorid, Polyvinylidenfluorid, Polyimide, duroplastische Polyester und Epoxidharze handelt.

5. Verfahren gemäss Anspruch 1, dadurch gekennzeichnet, dass der Träger eine Dicke von 0,01 mm bis 1 cm aufweist.

6. Verfahren gemäss Anspruch 1, dadurch gekennzeichnet, dass die Aufzeichnungsschicht aus Pigmenten mindestens ein Dithioketopyrrolopyrrol, ein Dithiochinacridon oder ein Phthalocyanin enthält.

7. Verfahren gemäss Anspruch 6, dadurch gekennzeichnet, dass als Dithioketopyrrolopyrrole Verbindungen der Formel I 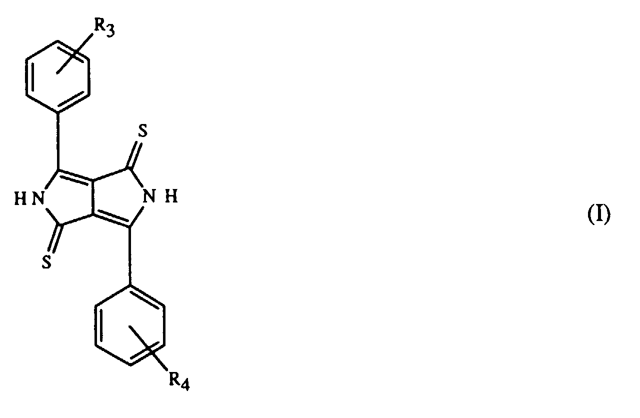 verwendet werden, worin R₃ und R₄ unabhängig voneinander -H, -Cl-, -CH₃, -OCH₃, -N(CH₃)₂, -SC₆H₅- oder -S-Alkyl mit 1 bis 12 C-Atomen sind.

8. Verfahren gemäss Anspruch 7, worin in Formel I R₃ und R₄ H sind.

9. Verfahren gemäss Anspruch 6, dadurch gekennzeichnet, dass man als Dithiochinacridon Verbindungen der Formeln 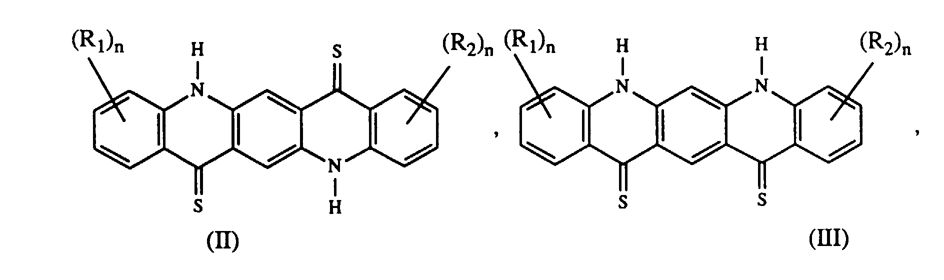 verwendet, worin R₁ und R₂ H, F, Cl, Br, C₁-C₁₈-Alkyl oder C₁-C₃-Alkoxy darstellen und n für 0 oder die Zahlen 1, 2 oder 3 steht.

10. Verfahren gemäss Anspruch 9, worin in den Formeln II und III R₁ und R₂ H bedeuten.

11. Verfahren gemäss Anspruch 1, dadurch gekennzeichnet, dass die Schicht aus Pigmenten eine Dicke von 100 Å bis 3000 Å aufweist.

12. Verfahren gemäss Anspruch 1, dadurch gekennzeichnet, dass die Schicht aus Pigmenten eine Dicke von 100 Å bis 2000 Å aufweist.

13. Verfahren gemäss Anspruch 1, dadurch gekennzeichnet, dass die Schicht aus Pigmenten eine Dicke von 200 Å bis 1000 Å aufweist.

14. Verfahren gemäss Anspruch 1, dadurch gekennzeichnet, dass auf der Schicht aus Pigmenten oder auf dem Träger eine Reflexionsschicht aufgebracht ist.

15. Verfahren gemäss Anspruch 14, dadurch gekennzeichnet, dass die Reflexionsschicht eine Dicke von 100 Å bis 5000 Å aufweist.

16. Verfahren gemäss Anspruch 1, dadurch gekennzeichnet, dass die Reflexionsschicht aus einem Metall der dritten, vierten und fünften Hauptgruppe und den Nebengruppen des Periodensystems der chemischen Elemente besteht.

17. Verfahren gemäss Anspruch 16, dadurch gekennzeichnet, dass die Reflexionsschicht aus den Metallen Aluminium oder Gold besteht.

18. Verfahren gemäss Anspruch 1, dadurch gekennzeichnet, dass die oberste Schicht mit einer Schutzschicht bedeckt ist.

19. Verfahren gemäss Anspruch 1, dadurch gekennzeichnet, dass sich zwischen Träger und der Schicht aus Pigmenten oder auf der Schicht aus Pigmenten eine weitere Schicht aus einer festen organischen Verbindung befindet.

20. Verfahren gemäss Anspruch 19, dadurch gekennzeichnet, dass die feste organische Verbindung Malonsäure, N-Phenylharnstoff, Dibenzylsulfoxid oder ein organisches Hydrazon ist.

21. Verfahren gemäss Anspruch 20, dadurch gekennzeichnet, dass die feste organische Verbindung Dibenzylsulfoxid ist.

22. Verfahren gemäss Anspruch 19, dadurch gekennzeichnet, dass die Schicht der organischen Verbindung aus einer reinen festen organischen Verbindung gebildet ist, oder als feste homogene Mischung der festen organischen Verbindung und des Pigments oder als gleichmässige homogene Mischung der festen organischen Verbindung mit einem transparenten Bindemittel vorliegt.

23. Verfahren gemäss Anspruch 22, dadurch gekennzeichnet, dass die Schicht der reinen festen organischen Verbindung eine Dicke von 50 Å bis 2000 Å aufweist.

24. Verfahren gemäss Anspruch 22, dadurch gekennzeichnet, dass die Mischung aus fester organischer Verbindung und Pigment eine Dicke von 50 Å bis 6000 Å aufweist.

25. Verfahren gemäss Anspruch 22, dadurch gekennzeichnet, dass die Schicht der Mischung aus fester organischer Verbindung und Bindemittel eine Dicke von 0,1 bis 100 µm aufweist.

26. Verfahren gemäss Anspruch 22, dadurch gekennzeichnet, dass die eine feste organische Verbindung und ein Bindemittel enthaltende Schicht den transparenten Träger des Aufzeichnungsmaterials darstellt.

27. Verfahren gemäss Anspruch 1, dadurch gekennzeichnet, dass das Aufzeichnungsmaterial aus mindestens einer Schicht eines Dithiopyrrolopyrrols oder eines Dithiochinacridons und einem Hydrazon besteht.

28. Verfahren gemäss Anspruch 20, dadurch gekennzeichnet, dass das Hydrazon 6 bis 40 C-Atome enthält.

29. Verfahren gemäss Anspruch 20, dadurch gekennzeichnet, dass das Hydrazon der Formel IV entspricht, 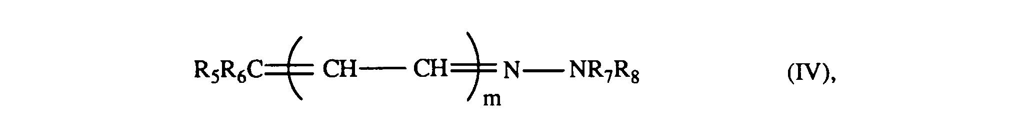 worin R₅ H, C₁-C₆-Alkyl oder Phenyl bedeutet, das unsubstituiert oder mit F, Cl, Br, C₁-C₆-Alkyl, C₁-C₆-Alkoxy, Di(C₁-C₆-Alkyl)amino, Diphenylamino, Dibenzylamino, Phenyl-benzyl-amino,(C₁-C₆-Alkyl)-phenyl-amino oder (C₁-C₆-Alkyl)-benzyl-amino substituiert ist,
R₆ Phenyl, Naphthyl, Anthryl, Styryl, Pyridyl, Furyl oder Thiophenyl darstellt, die unsubstituiert oder mit F, Cl, Br, C₁-C₆-Alkyl, C₁-C₆-Alkoxy, Di(C₁-C₆-Alkyl)amino, Diphenylamino, Dibenzylamino, Phenyl-benzyl-amino, (C₁-C₆-Alkyl)-phenyl-amino oder (C₁-C₆-Alkyl)-benzyl-amino substituiert sind, oder R₅ H und R₆ einen Carbazolrest der Formel 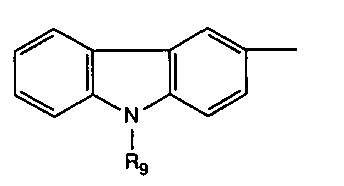 bedeuten, der unsubstituiert oder mit F, Cl, Br, C₁-C₆-Alkyl, C₁-C₆-Alkoxy oder Di(C₁-C₆-Alkyl)amino substituiert ist, wobei R₉ C₁-C₆-Alkyl darstellt, R₇ und R₈ unabhängig voneinander C₁-C₆-Alkyl, Phenyl, Naphthyl oder Benzyl oder mit F, Cl, Br, C₁-C₆-Alkyl, C₁-C₆-Alkoxy oder Di(C₁-C₆-Alkyl)amino substituiertes Phenyl, Naphthyl oder Benzyl bedeuten, und m für 0 oder 1 steht.

30. Verfahren gemäss Anspruch 20, dadurch gekennzeichnet, dass die Hydrazone den Formeln 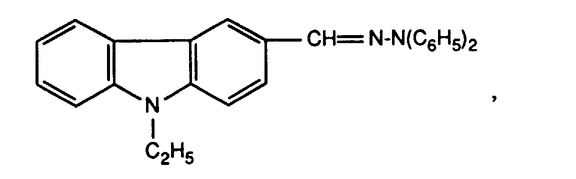 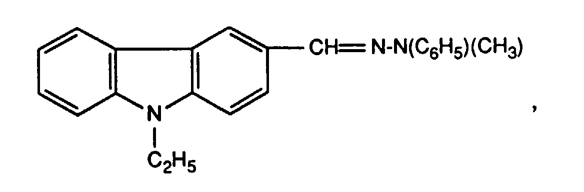 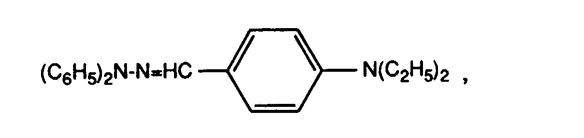 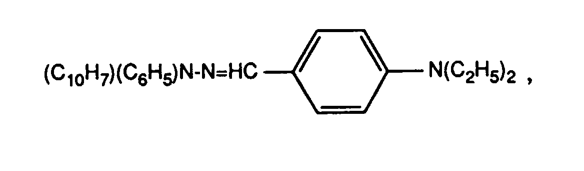
(C₆H₅)₂N-N=CH-CH=C(p-CH₃O-C₆H₅)₂
entsprechen.

31. Verfahren gemäss Anspruch 1, dadurch gekennzeichnet, dass das verwendete Material den Aufbau (a) transparenter Träger, (b) Aufzeichnungsschicht aus Pigment und fester organischer Verbindung und (c) transparente Schutzschicht aufweist.

32. Verfahren gemäss Anspruch 1, dadurch gekennzeichnet, dass das verwendete Material den Aufbau (a) transparenter Träger, (b) Aufzeichnungsschicht aus Pigment und fester organischer Verbindung, (c) Reflexionsschicht und (d) Schutzschicht aufweist.

33. Verfahren gemäss Anspruch 1, dadurch gekennzeichnet, dass das verwendete Material den Aufbau (a) Träger, (b) Reflexionsschicht, (c) Aufzeichnungsschicht aus Pigment und fester organischer Verbindung und (d) transparente Schutzschicht aufweist.

34. Verfahren gemäss Anspruch 1, dadurch gekennzeichnet, dass die Laserstrahlung eine Energie von 0,1 bis 10 nJ/Markierung (Bit) beträgt.

35. Verfahren gemäss Anspruch 1, dadurch gekennzeichnet, dass man die gespeicherte Information durch Messung der Veränderung der Absorption nach dem Reflexionsverfahren oder nach dem Transmissionsverfahren unter Verwendung von Laserstrahlung im NIR-Bereich ein- oder mehrfach ausliest.

36. Verfahren gemäss Anspruch 35, dadurch gekennzeichnet, dass die gespeicherte Information bei der zur Aufzeichnung benutzten Wellenlänge ausgelesen wird.

37. Informationen enthaltendes Material, bei dem in der Aufzeichnungsschicht eines Aufzeichnungmaterials aus einem Träger, auf dem mindestens eine Schicht eines Pigments der Gruppe der Dithiopyrrolopyrrole, Dithiochinacridone, Phthalocyanine oder Mischungen von mehreren dieser Pigmente als Aufzeichnungsschicht aufgebracht ist und diese Pigmente ein Absorptionsband im NIR-Bereich aufweisen, und die Pigmente sich in Kontakt mit einer festen organischen Verbindung befinden, die durch die Einwirkung der Laserstrahlung strahlung die Kristallmodifikation des Pigments ändert und selbst vor und nach der keine Absorption im NIR-Bereich aufweist, Markierungen in Form von Bits eingeschrieben sind, die im NIR-Bereich gegenüber der unveränderten Umgebung eine erhöhte Reflexion und verminderte Absorption aufweisen.

38. Material gemäss Anspruch 37, dadurch gekennzeichnet, dass es den Aufbau (a) transparenter Träger, (b) Aufzeichnungsschicht und (c) transparente Schutzschicht aufweist.

39. Material gemäss Anspruch 37, dadurch gekennzeichnet, dass es den Aufbau (a) transparenter Träger, (b) Aufzeichnungsschicht, (c) Reflexionsschicht und (d) Schutzschicht aufweist.

40. Material gemäss Anspruch 37, dadurch gekennzeichnet, dass es den Aufbau (a) Träger, (b) Reflexionsschicht, (c) Aufzeichnungsschicht und (d) transparente Schutzschicht aufweist.

41. Material gemäss den Ansprüchen 37 bis 40, dadurch gekennzeichnet, dass die Aufzeichnungsschicht aus mindestens einer Schicht eines Dithiopyrrolopyrrols und mindestens einer Schicht Dibenzylsulfoxid oder eines organischen Hydrazons, oder aus mindestens einer Schicht in Form einer homogenen Mischung eines Dithiopyrrolopyrrols und Dibenzylsulfoxid oder eines organischen Hydrazons gebildet ist.

42. Material gemäss den Ansprüchen 37 bis 40, dadurch gekennzeichnet, dass die Aufzeichnungsschicht aus mindestens einer Schicht eines Dithiochinacridons und mindestens einer Schicht eines organischen Hydrazons, oder aus mindestens einer Schicht in Form einer homogenen Mischung eines Dithiochinacridons und eines organischen Hydrazons gebildet ist.

43. Material zur optischen Aufzeichnung und zur Speicherung von Informationen, bei dem auf einem gegebenfalls transparenten und dielektrischen Träger mindestens eine Schicht eines Pigments der Gruppe der Dithiopyrrolopyrrole, Dithiochinacridone, Phthalocyanine oder Mischungen von mehreren dieser Pigmente aufgebracht ist und das Pigment ein Absorptionsband im NIR-Bereich aufweist, wobei sich das Pigment in Kontakt mit einer festen organischen Verbindung befindet, die durch die Einwirkung der Laserstrahlung die Kristallmodifikation des Pigments ändert und selbst vor und nach der Bestrahlung keine Absorption im NIR-Bereich aufweist.

44. Material gemäss Anspruch 43, dadurch gekennzeichnet, dass sich zwischen dem Aufzeichnungsmaterial und dem Träger oder auf dem Aufzeichnungsmaterial eine Schicht aus einer festen organischen Verbindung gegebenenfalls zusammen mit einem transparenten Bindemittel befindet.

45. Material gemäss Anspruch 43, dadurch gekennzeichnet, dass das Aufzeichnungsmaterial eine homogene Mischung aus einem Pigment und eine festen organischen Verbindung darstellt.

46. Material gemäss den Ansprüchen 44 und 45, dadurch gekennzeichnet, dass das Pigment ein Dithiopyrrolopyrrol oder ein Dithiochinacridon ist, und die feste organische Verbindung ein organisches Hydrazon ist.

47. Material gemäss Anspruch 43, dadurch gekennzeichnet, dass auf der obersten Schicht eine Reflexionsschicht aufgebracht ist, die gegebenenfalls mit einer Schutzschicht bedeckt ist.

## Claims

1. A process for the optical recording and storage of information in the form of bits by irradiating a recording material comprising a substrate coated with at least one layer of a pigment selected from the group consisting of the dithiopyrrolopyrroles, dithioquinacridones,
phthalocyanines or mixtures of two or more of these pigments as recording layer dotwise or linearly with laser light in the NIR range, which pigment (a) has a crystal modification having an absorption band in the NIR range, and (b) is in contact with a solid organic compound that changes the crystal modification of the pigment upon irradiation with laser light, so that (c) after irradiation the absorption in the NIR range is reduced, while the organic compound exhibits no absorption in the NIR range before and after irradiation.

2. A process according to claim 1, wherein the substrate comprises metals, metal alloys, glass, minerals, ceramics and thermosetting or thermoplastic materials.

3. A process according to claim 2, wherein the substrate comprises glasses or homo- or copolymeric plastic materials.

4. A process according to claim 3, wherein the plastics material comprises thermoplastic polycarbonates, polyamides, polyesters, polyacrylates and polymethacrylates, polyurethanes, polyolefins, polyvinyl chloride, polyvinylidene fluoride, polyimides, thermosetting polyesters and epoxy resins.

5. A process according to claim 1, wherein the substrate has a thickness of 0.01 to 1 cm.

6. A process according to claim 1, wherein the recording layer comprises as pigments at least one dithioketopyrrolopyrrole, dithioquinacridone or phthalocyanine.

7. A process according to claim 6, wherein the dithioketopyrrolopyrroles used are compounds of formula I, 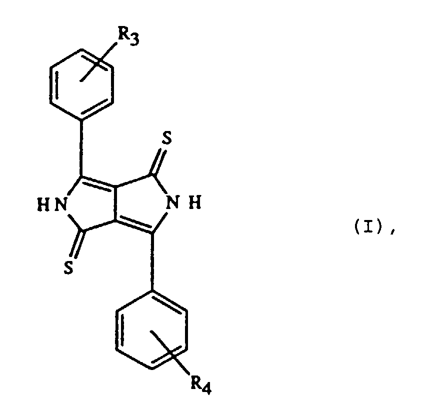 wherein R₃ and R₄ are each independently of the other -H, -Cl, -CH₃, -OCH₃, -N(CH₃)₂, -SC₆H₅ or -S-alkyl of 1 to 12 carbon atoms.

8. A process according to claim 7, wherein in formula I R₃ and R₄ are H.

9. A process according to claim 6, wherein the dithioquinacridones used are compounds of formulae 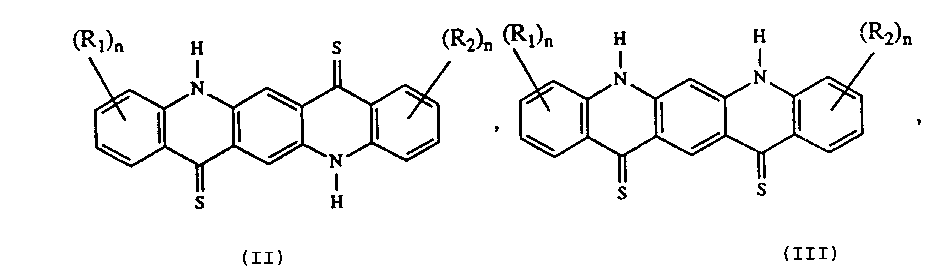 wherein R₁ and R₂ are H, F, Cl, Br, C₁-C₁₈alkyl or C₁-C₃alkoxy and n is 0 or the numbers 1, 2 or 3.

10. A process according to claim 9, wherein in formulae II and III R₁ and R₂ are H.

11. A process according to claim 1, wherein the layer of pigments has a thickness of 100 Å to 3000 Å.

12. A process according to claim 1, wherein the layer of pigments has a thickness of 100 Å to 2000 Å.

13. A process according to claim 1, wherein the layer of pigments has a thickness of 200 Å to 1000 Å.

14. A process according to claim 14, wherein the layer of pigments or the substrate is coated with a reflective layer.

15. A process according to claim 14, wherein the reflective layer has a thickness of 100 Å to 5000 Å.

16. A process according to claim 1, wherein the reflective layer consists of a metal of the third, fourth and fifth main group and the subgroups of the Periodic Table of the Elements.

17. A process according to claim 16, wherein the reflective layer is of the metals aluminium or gold.

18. A process according to claim 1, wherein the topmost layer is covered with a protective layer.

19. A process according to claim 1, wherein a further layer of a solid organic compound is located between the substrate and the layer of pigments or on the layer of pigments.

20. A process according to claim 19, wherein the solid organic compound is malonic acid, N-phenylurea, dibenzyl sulfoxide or an organic hydrazone.

21. A process according to claim 20, wherein the solid organic compound is dibenzyl sulfoxide.

22. A process according to claim 19, wherein the layer of organic compound consists of a pure solid organic compound or is a solid homogeneous mixture of the solid organic compound and the pigment or is a uniform homogeneous mixture of the solid organic compound with a transparent binder.

23. A process according to claim 22, wherein the layer of pure solid organic compound has a thickness of 50 Å to 2000 Å.

24. A process according to claim 22, wherein the mixture of solid organic compound and pigment has a thickness of 50 Å to 6000 Å.

25. A process according to claim 22, wherein the layer of the mixture of solid organic compound and binder has a thickness of 0.1 to 100 µm.

26. A process according to claim 22, wherein the layer of a solid organic compound and a binder is the transparent substrate of the recording material.

27. A process according to claim 1, wherein the recording material consists of at least one layer of a dithiopyrrolopyrrole or of a dithioquinacridone and a hydrazone.

28. A process according to claim 20, wherein the hydrazone contains 6 to 40 carbon atoms.

29. A process according to claim 20, wherein the hydrazone has the formula IV 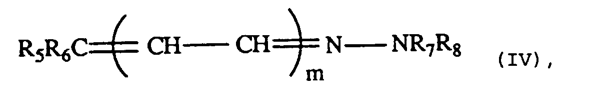 wherein R₅ is H, C₁-C₆alkyl or phenyl which is unsubstituted or substituted by F, Cl, Br, C₁-C₆alkyl, C₁-C₆alkoxy, di(C₁-C₆alkyl)amino, diphenylamino, dibenzylamino, phenylbenzylamino, (C₁-C₆alkyl)phenylamino or (C₁-C₆alkyl)benzylamino, R₆ is phenyl, naphthyl, anthryl, styryl, pyridyl, furyl or thiophenyl which are unsubstituted or substituted by F, Cl, Br, C₁-C₆alkyl, C₁-C₆alkoxy, di(C₁-C₆alkyl)amino, diphenylamino, dibenzylamino, phenylbenzylamino, (C₁-C₆alkyl)phenylamino or (C₁-C₆alkyl)benzylamino, or R₅ is H and R₆ is a carbazole radical of formula 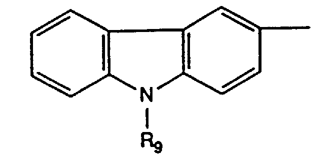 which is unsubstituted or substituted by F, Cl, Br, C₁-C₆alkyl, C₁-C₆alkoxy or di(C₁-C₆alkyl)amino, and R₉ is C₁-C₆alkyl, R₇ and R₈ are each independently of the other C₁-C₆alkyl, phenyl, naphthyl or benzyl, or phenyl, naphthyl or benzyl which are each substituted by F, Cl, Br, C₁-C₆alkyl, C₁-C₆alkoxy or di(C₁-C₆alkyl)amino, and m is 0 or 1.

30. A process according to claim 20, wherein the hydrazones have the formulae

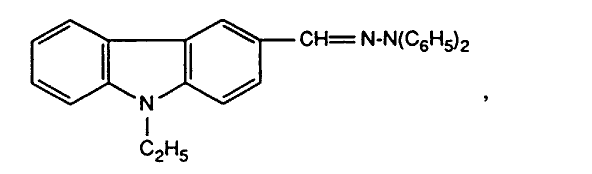

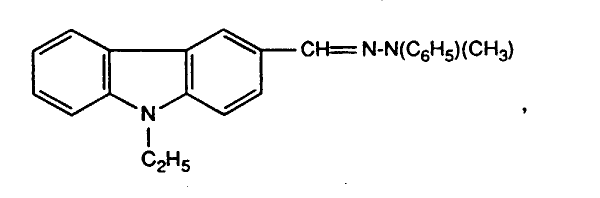

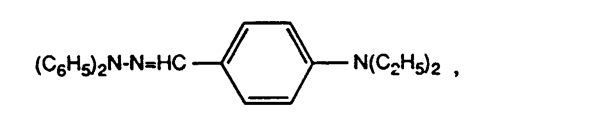

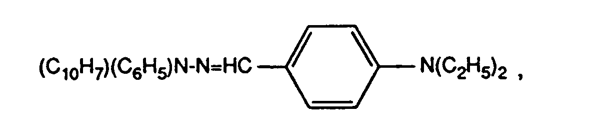

31. A process according to claim 1, wherein the material used has the structure used (a) transparent substrate, (b) recording layer of pigment and solid organic compound and (c) transparent protective layer.

32. A process according to claim 1, wherein the material used has the structure (a) transparent substrate, (b) recording layer of pigment and solid organic compound, (c) reflective layer and (d) protective layer.

33. A process according to claim 1, wherein the material used has the structure (a) substrate, (b) reflective layer, (c) recording layer of pigment and solid organic compound and (d) transparent protective layer.

34. A process according to claim 1, wherein the laser light has an energy of 0.1 to 10 nJ/mark (bit).

35. A process according to claim 1, wherein the stored information is read out once or repeatedly by measuring the shift in absorption by the reflection or transmission method using laser light in the NIR range.

36. A process according to claim 35, wherein the stored information is read out at the wavelength used for recording.

37. A material which contains information, the recording layer of which recording material comprising a substrate coated with at least one layer of a pigment selected from the group of the dithiopyrrolopyrroles, dithioquinacridones, phthalocyanines or mixtures of several of these pigments as recording layer, which pigments exhibit an absorption band in the NIR range and are in contact with a solid organic compound that changes the crystal modification of the pigment upon irradiation with laser light and even before and after irradiation exhibits no absorption in the NIR range, and said recording layer contains written marks in the form of bits which, compared with the unchanged environment, have a greater reflectivity and reduced absorption in the NIR range.

38. A material according to claim 37, which has the structure (a) transparent substrate, (b) recording layer and (c) transparent protective layer.

39. A material according to claim 37, which has the structure (a) transparent substrate, (b) recording layer, (c) reflective layer and (d) protective layer.

40. A material according to claim 37, which has the structure (a) substrate, (b) reflective layer, (c) recording layer and (d) transparent protective layer.

41. A material according to claims 37 to 40, wherein the recording layer consists of at least one layer of a dithiopyrrolopyrrole and at least one layer of dibenzyl sulfoxide or of an organic hydrazone, or of at least one layer in the form of a homogeneous mixture of a dithiopyrrolopyrrole and dibenzyl sulfoxide or of an organic hydrazone.

42. A material according to claims 37 to 40, wherein the recording layer consists of at least one layer of a dithioquinacridone and at least one layer of an organic hydrazone, or of at least one layer in the form of a homogeneous mixture of a dithioquinacridone and of an organic hydrazone.

43. A material for the optical recording and storing of information comprising an optionally transparent and dielectric substrate coated with at least one layer of a pigment selected from the group of the dithiopyrrolopyrroles, dithioquinacridones, phthalocyanines or mixtures of several of these pigments, which pigment exhibits an absorption band in the NIR range and is in contact with a solid organic compound that changes the crystal modification of the pigment upon irradiation with laser light and even before and after irradiation exhibits no absorption in the NIR range.

44. A material according to claim 43, wherein a layer of a solid organic compound, without or together with a transparent binder, is located between the recording material and the substrate or on the recording material.

45. A material according to claim 43, wherein the recording material is a homogeneous mixture of a pigment and a solid organic compound.

46. A material according to claims 44 and 45, wherein the pigment is a dithiopyrrolopyrrole or a dithioquinacridone, and the solid organic compound is an organic hydrazone.

47. A material according to claim 43, wherein the topmost layer is coated with a reflective layer which may be covered with a protective layer.

## Revendications

1. Procédé d'enregistrement optique et de stockage d'informations sous forme de bits, selon lequel on soumet de façon ponctuelle ou linéaire à un rayonnement laser dans le domaine IR proche un matériau d'enregistrement contenant sur un support au moins une couche d'un pigment du groupe constitué par les dithiopyrrolopyrroles, les dithioquinacridones, les phtalocyanines ou des mélanges de plusieurs de ces pigments comme couche d'enregistrement, caractérisé en ce que (a) le pigment présente une forme cristalline avec une bande d'absorption dans le domaine IR proche, (b) le pigment se trouve en contact avec un composé organique solide qui modifie sous l'effet du rayonnement laser la forme cristalline du pigment, de façon que (c) l'absorption dans le domaine IR proche soit réduite après l'irradiation, le composé organique ne présentant pas d'absorption dans le domaine IR proche, ni avant ni après l'irradiation.

2. Procédé selon la revendication 1, caractérisé en ce qu'il s'agit pour le support de métaux, d'alliages métalliques, de verres, de minéraux, de céramiques et de matières plastiques thermodurcissables ou thermoplastiques.

3. Procédé selon la revendication 2, caractérisé en ce que le support est un verre ou une matière plastique homopolymère ou copolymère.

4. Procédé selon la revendication 3, caractérisé en ce qu'il s'agit, en ce qui concerne la matière plastique, de polycarbonates, polyamides, polyesters, polyacrylates et polyméthacrylates, polyuréthanes, polyoléfines, poly(chlorure de vinyle), poly(fluorure de vinylidène), polyimides thermoplastiques, de polyesters et résines époxy thermodurcissables.

5. Procédé selon la revendication 1, caractérisé en ce que le support a une épaisseur de 0,01 mm à 1 cm.

6. Procédé selon la revendication 1, caractérisé en ce que la couche d'enregistrement constituée de pigments contient au moins un dithiocétopyrrolopyrrole, une dithioquinacridone ou une phtalocyanine.

7. Procédé selon la revendication 6, caractérisé en ce que l'on utilise comme dithiocétopyrrolopyrroles des composés de formule I 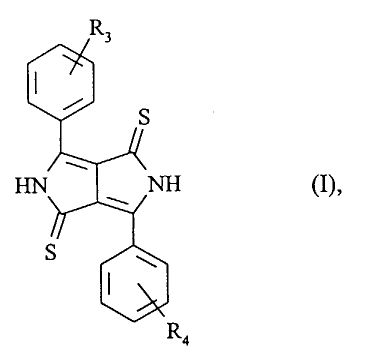 dans laquelle R₃ et R₄ sont indépendamment l'un de l'autre -H, -Cl, -CH₃, -OCH₃, -N(CH₃)₂, -SC₆H₅ ou -S-alkyle de 1 à 12 atomes de carbone.

8. Procédé selon la revendication 7, dans lequel, dans la formule I, R₃ et R₄ sont H.

9. Procédé selon la revendication 6, caractérisé en ce que l'on utilise comme dithioquinacridones des composés de formule (II) et de formule (III), 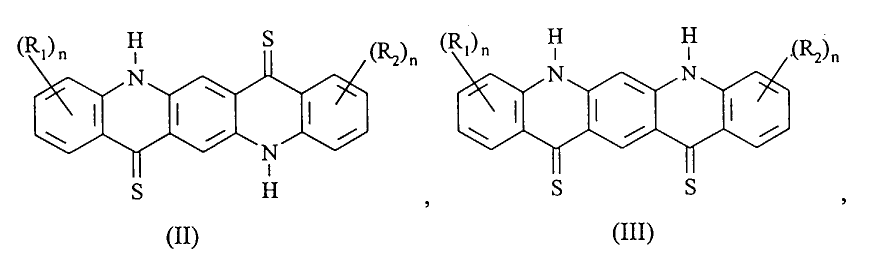 dans lesquelles R₁ et R₂ représentent H, F, Cl, Br, alkyle en C₁-C₁₈ ou alcoxy en C₁-C₃, et n est 0 ou les chiffres 1, 2 ou 3.

10. Procédé selon la revendication 9, dans lequel, dans les formules II et III, R₁ et R₂ sont H.

11. Procédé selon la revendication 1, caractérisé en ce que la couche de pigments a une épaisseur de 100 Å à 3000 Å.

12. Procédé selon la revendication 1, caractérisé en ce que la couche de pigments a une épaisseur de 100 Å à 2000 Å.

13. Procédé selon la revendication 1, caractérisé en ce que la couche de pigments a une épaisseur de 200 Å à 1000 Å.

14. Procédé selon la revendication 1, caractérisé en ce qu'une couche de réflexion est appliquée sur la couche de pigments ou sur le support.

15. Procédé selon la revendication 14, caractérisé en ce que la couche de réflexion a une épaisseur de 100 Å à 5000 Å.

16. Procédé selon la revendication 1, caractérisé en ce que la couche de réflexion est constituée d'un métal du troisième, quatrième et cinquième groupe principal et des groupes secondaires du système périodique des éléments chimiques.

17. Procédé selon la revendication 16, caractérisé en ce que la couche de réflexion est constituée des métaux aluminium ou or.

18. Procédé selon la revendication 1, caractérisé en ce que la couche supérieure est recouverte d'une couche protectrice.

19. Procédé selon la revendication 1, caractérisé en ce que, entre le support et la couche de pigments ou sur la couche de pigments, se trouve une autre couche constituée d'un composé organique solide.

20. Procédé selon la revendication 19, caractérisé en ce que le composé organique solide est l'acide malonique, la N-phénylurée, le dibenzylsulfoxyde ou une hydrazone organique.

21. Procédé selon la revendication 20, caractérisé en ce que le composé organique solide est le dibenzylsulfoxyde.

22. Procédé selon la revendication 19, caractérisé en ce que la couche de composé organique est formée d'un composé organique solide pur, ou se présente sous forme d'un mélange homogène solide du composé organique solide et du pigment ou sous forme d'un mélange homogène uniforme du composé organique solide avec un liant transparent.

23. Procédé selon la revendication 22, caractérisé en ce que la couche de composé organique solide pur a une épaisseur de 50 Å à 2000 Å.

24. Procédé selon la revendication 22, caractérisé en ce que le mélange de composé organique solide et de pigment a une épaisseur de 50 Å à 6000 Å.

25. Procédé selon la revendication 22, caractérisé en ce que la couche de mélange de composé organique solide et de liant a une épaisseur de 0,1 à 100 µm.

26. Procédé selon la revendication 22, caractérisé en ce que la couche contenant un composé organique solide et un liant représente le support transparent du matériau d'enregistrement.

27. Procédé selon la revendication 1, caractérisé en ce que le matériau d'enregistrement est constitué d'au moins une couche d'un dithiopyrrolopyrrole ou d'une dithioquinacridone et d'une hydrazone.

28. Procédé selon la revendication 20, caractérisé en ce que l'hydrazone contient 6 à 40 atomes de carbone.

29. Procédé selon la revendication 20, caractérisé en ce que l'hydrazone correspond à la formule IV 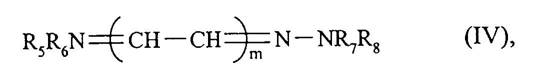 dans laquelle R₅ est H ou un groupe alkyle en C₁-C₆ ou phényle, qui est non substitué ou substitué par F, Cl, Br, alkyle en C₁-C₆, alcoxy en C₁-C₆, di(alkyl en C₁-C₆)amino, diphénylamino, dibenzylamino, phényl-benzylamino, (alkyl en C₁-C₆)-phénylamino ou (alkyl en C₁-C₆)-benzylamino,
R₆ est un groupe phényle, naphtyle, anthryle, styryle, pyridyle, furyle ou thiényle non substitué ou substitué par F, Cl, Br, alkyle en C₁-C₆, alcoxy en C₁-C₆, di(alkyl en C₁-C₆)amine, diphénylamino, dibenzylamino, phényl-benzylamino, (alkyl en C₁-C₆)-phénylamino ou (alkyl en C₁-C₆)-benzylamino,
ou bien R₅ est H et R₆ est un reste carbazole de formule 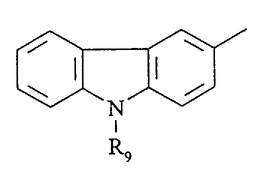 non substitué ou substitué par F, Cl, Br, alkyle en C₁-C₆, alcoxy en C₁-C₆ ou di(alkyl en C₁-C₆)amino, R₉ étant un groupe alkyle en C₁-C₆,
R₇ et R₈ représentent indépendamment l'un de l'autre un groupe alkyle en C₁-C₆, phényle, naphtyle ou benzyle ou un groupe phényle, naphtyle ou benzyle substitué par F, Cl, Br, alkyle en C₁-C₆, alcoxy en C₁-C₆ ou di(alkyl en C₁-C₆)amino,
et m est 0 ou 1.

30. Procédé selon la revendication 20, caractérisé en ce que les hydrazones correspondent aux formules 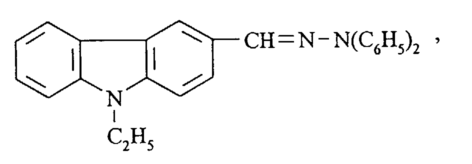 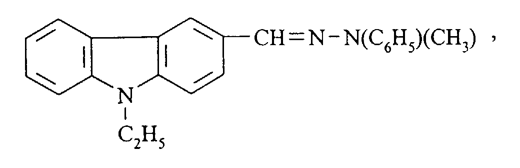 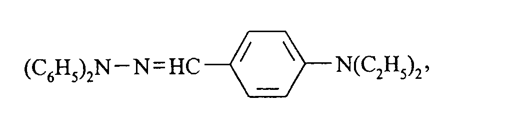 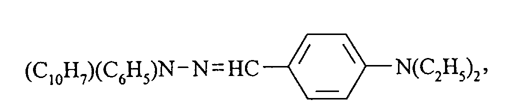
(C₆H₅)₂N-N=CH-CH=C(p-CH₃O-C₆H₅)₂.

31. Procédé selon la revendication 1, caractérisé en ce que le matériau utilisé a la structure: (a) support transparent, (b) couche d'enregistrement constituée d'un pigment et d'un composé organique solide et (c) couche protectrice transparente.

32. Procédé selon la revendication 1, caractérisé en ce que le matériau utilisé a la structure: (a) support transparent, (b) couche d'enregistrement constituée d'un pigment et d'un composé organique solide, (c) couche de réflexion et (d) couche protectrice.

33. Procédé selon la revendication 1, caractérisé en ce que le matériau utilisé a la structure: (a) support, (b) couche de réflexion, (c) couche d'enregistrement constituée d'un pigment et d'un composé organique solide et (d) couche protectrice transparente.

34. Procédé selon la revendication 1, caractérisé en ce que le rayonnement laser a une énergie de 0,1 à 10 nJ/marque (bit).

35. Procédé selon la revendication 1, caractérisé en ce que l'on extrait une ou plusieurs fois les informations stockées en mesurant la variation de l'absorption après le processus de réflexion ou après le processus de transmission en utilisant un rayonnement laser dans le domaine IR proche.

36. Procédé selon la revendication 35, caractérisé en ce que l'on extrait les informations stockées à la longueur d'onde utilisée pour l'enregistrement.

37. Matériau contenant des informations, dans lequel, dans la couche d'enregistrement d'un matériau d'enregistrement constitué d'un support sur lequel est appliquée au moins une couche d'un pigment du groupe constitué par les dithiopyrrolopyrroles, les dithioquinacridones, les phtalocyanines ou les mélanges de plusieurs de ces pigments en tant que couche d'enregistrement, ces pigments présentant une bande d'absorption dans le domaine IR proche, et les pigments se trouvant en contact avec un composé organique solide qui modifie sous l'effet d'un rayonnement laser la forme cristalline du pigment et qui ne présente pas lui-même d'absorption dans le domaine IR proche, ni avant ni après l'irradiation, sont inscrites des marques sous forme de bits qui présentent par rapport à leur environnement non modifié une réflexion plus élevée et une absorption réduite dans le domaine IR proche.

38. Matériau selon la revendication 37, caractérisé en ce qu'il a la structure: (a) support transparent, (b) couche d'enregistrement et (c) couche protectrice transparente.

39. Matériau selon la revendication 37, caractérisé en ce qu'il a la structure: (a) support transparent, (b) couche d'enregistrement, (c) couche de réflexion et (d) couche protectrice.

40. Matériau selon la revendication 37, caractérisé en ce qu'il a la structure: (a) support, (b) couche de réflexion, (c) couche d'enregistrement et (d) couche protectrice transparente.

41. Matériau selon les revendications 37 à 40, caractérisé en ce que la couche d'enregistrement est formée d'au moins une couche d'un dithiopyrrolopyrrole et d'au moins une couche de dibenzylsulfoxyde ou d'une hydrazone organique, ou d'au moins une couche sous forme d'un mélange homogène d'un dithiopyrrolopyrrole et de dibenzylsulfoxyde ou d'une hydrazone organique.

42. Matériau selon les revendications 37 à 40, caractérisé en ce que la couche d'enregistrement est formée d'au moins une couche d'une dithioquinacridone et d'au moins une couche d'une hydrazone organique, ou d'au moins une couche sous forme d'un mélange homogène d'une dithioquinacridone et d'une hydrazone organique.

43. Matériau pour l'enregistrement optique et le stockage d'informations, dans lequel au moins une couche d'un pigment du groupe constitué par les dithiopyrrolopyrroles, les dithioquinacridones, les phtalocyanines ou les mélanges de plusieurs de ces pigments est appliquée sur un support éventuellement transparent et diélectrique, et le pigment présente une bande d'absorption dans le domaine IR proche, le pigment se trouvant en contact avec un composé organique solide qui, sous l'effet d'un rayonnement laser, modifie la forme cristalline du pigment, et qui ne présente pas lui-même d'absorption dans le domaine IR proche, ni avant ni après l'irradiation.

44. Matériau selon la revendication 43, caractérisé en ce que, entre le matériau d'enregistrement et le support, ou sur le matériau d'enregistrement, se trouve une couche d'un composé organique solide et éventuellement d'un liant transparent.

45. Matériau selon la revendication 43, caractérisé en ce que le matériau d'enregistrement est un mélange homogène d'un pigment et d'un composé organique solide.

46. Matériau selon les revendications 44 et 45, caractérisé en ce que le pigment est un dithiopyrrolopyrrole ou une dithioquinacridone, et le composé organique solide est une hydrazone organique.

47. Matériau selon la revendication 43, caractérisé en ce qu'une couche de réflexion éventuellement recouverte d'une couche protectrice est appliquée sur la couche supérieure.
